# EUROPÄISCHE PATENTSCHRIFT

(11) **EP 1 898 097 B1**
(45) Veröffentlichungstag und Bekanntmachung des Hinweises auf die Patenterteilung: **28.04.2010**
(21) Anmeldenummer: 07016603.8
(22) Anmeldetag: 24.08.2007
(51) Int. Cl.: F04D 13/06, F04D 15/00, H02K 29/00, B05B 17/08

(54) **Wasserpumpe sowie Wasserspielanlage mit Pumpe**
Water pump and water fountain facility with pump
Pompe à eau et installation de jeux aquatiques dotée d'une pompe

(30) Priorität: 01.09.2006 DE 102006041310
(43) Veröffentlichungstag der Anmeldung: 12.03.2008
(73) Patentinhaber: Oase GmbH, 48477 Hörstel-Riesenbeck (DE)
(72) Erfinder: Hanke, Andreas, 49078 Osnabrück (DE); Lambers, Herbert, 48477 Hörstel (DE)
(74) Vertreter: Engelmann, Kristiana

(56) Entgegenhaltungen:
- EP-A- 0 481 423
- EP-A- 0 778 649
- EP-A- 1 391 984
- WO-A-99/01665
- US-A- 4 948 046
- US-A- 5 197 865

## Beschreibung

Die Erfindung betrifft eine Wasserpumpe, insbesondere für Springbrunnen bzw. Wasserspielanlagen sowie Gartenteiche, mit den Merkmalen des Anspruchs 1 sowie eine Wasserspielanlage mit Pumpe mit den Merkmalen des Anspruchs 7.

Herkömmliche Wasserpumpen für Gartenteiche und Springbrunnen werden in der Praxis extern gesteuert, wenn die Art und Höhe des Wasserstrahls oder ganz generell Start und Stop der Pumpe beeinflußt werden soll. Um in Springbrunnenanlagen, vorwiegend bei mehrstrahligen Wasserspielanlagen, spezielle Wassereffekte zu erzielen, erfolgt bei herkömmlichen Pumpen die Regelung der Wassermenge pro Wasseraustritt über elektrische, magnetische oder pneumatische Stellventile (US 4,948,046; DE 1 177 564). Dabei speist eine einzelne, große Pumpe das Wasser in ein Verteilungssystem ein, in dem einzelne, den nachfolgenden Wasserdüsen zugeordnete Stellventile über eine externe Steuerung aktiviert werden. Diese Systeme reagieren sehr träge und sind nur ungenau zu steuern. Außerdem stellen die elektrischen Stellventile einen hohen Kostenfaktor dar. Auch die aufwendige Verkabelung, die Verrohrung und die Steuerung erzeugen hohe Systemkosten. Darüber hinaus sind die laufenden Betriebskosten hoch, da die Pumpe stets unter voller Last läuft. Alternativ kommen Asynchronpumpen in Betracht, die über eine Phasenanschnittsteuerung gesteuert werden. Auch diese Steuerungen sind jedoch teuer, träge in der Reaktion und schwer zu kontrollieren. Regelbare Wasserpumpen sind als Teil einer Heizungsanlage von Gebäuden bekannt (WO 99/01665 als nächstliegender Stand der Technik), werden als Kühlwasserpumpe in Brennkraftmaschinen (EP 0 778 649 A1) eingesetzt oder weisen elektrisch kommutierbare Motoren als Naßläufer auf (EP 1 391 984 A2). In EP 0 481 423 A1 ist eine in einem Metallgehäuse vorgesehene Zahnradpumpe ohne nachteilige Wellenlager am Motor vorgeschlagen.

Die Erfindung befaßt sich daher mit dem Problem, eine für Springbrunnen und Wasserspiele geeignete Wasserpumpe zu schaffen, die mit verringerten Kosten einsetzbar ist und bei einfacher Steuerung variable Wasser-Effekte ermöglicht. Die Lösung der Aufgabe liegt in der erfindungsgemäßen Wasserpumpe mit den Merkmalen des Anspruchs 1 und einer eine Mehrzahl dieser Pumpen aufweisenden Wasserspielanlage mit den Merkmalen des Anspruchs 7.

Durch die Kombination der Verwendung eines elektronisch kommutierten Motors (EC-Motor), einer Steuerelektronik und einer Regelungselektronik mit Drehzahlerkennung, Prozessor, Datenspeicher sowie BUS-Steuermodul wird die Pumpe als autonome Einheit ausgebildet, die mittels der im Motorgehäuse wasserdicht vergossenen Elektronik an die Bedingungen im Bereich von Springbrunnen, Gartenteichen o. dgl. Anlagen angepaßt ist. Die komplette für eine präzise Regelung notwendige Intelligenz sitzt dabei in der Pumpe selbst. Die prozessor- und softwareunterstützte Regelung ermöglicht es, daß eine gewünschte Drehzahl der Pumpe tatsächlich erreicht und gehalten wird, so daß ein geschlossener Regelkreis vorliegt, bei der die Drehzahl kontinuierlich ermittelt, abgeglichen und eventuell angepaßt wird.

Die Drehzahlerkennungseinrichtung kann einen Drehzahlsensor aufweisen, der zur Erkennung der Rotorlage und der Drehfrequenz ausgelegt ist. Hierbei kann es sich beispielsweise um einen Hall-Sensor handeln. Es ist jedoch auch möglich und durch die der Pumpe innewohnende Intelligenz ohne zusätzlichen Materialaufwand realisierbar, die Drehzahlerkennungseinrichtung sensorlos auszubilden. Dabei wird zu jedem Zeitpunkt an der bzw. den gerade nicht Strom aufnehmenden Spulen, die in dem Moment nicht geschaltet sind, der durch den Magnetrotor rückinduzierte Stromfluß gemessen und aus diesem die Rotorlage ermittelt. Die Geschwindigkeit, mit der sich die einen rückinduzierten Stromfluß abgebenden Spulen ändern, gibt dabei die Drehfrequenz an. Beide Informationen werden über den Prozessor ausgewertet und zur Drehzahlregelung herangezogen.

Der Datenspeicher der erfindungsgemäßen Pumpe kann bevorzugt mehrere aufrufbare Programme für unterschiedliche Arten des Pumpenbetriebs enthalten, die ohne Öffnung der Pumpe von außen wahlweise aktivierbar sind. Beispielsweise bei einer Verwendung der Pumpe in Gartenteichen können so über eine externe Bedieneinheit für vom Benutzer vorgefertigte Programme, beispielsweise Sommer- oder Winterprogramme, Programme für viel oder wenig Fischbesatz, tageszeitangepaßte Zeitprofile oder dergleichen abgerufen werden.

Weitere Vorteile und Einzelheiten ergeben sich aus den Unteransprüchen und in den Zeichnungen dargestellten Ausführungsbeispielen der Erfindung, die im folgenden beschrieben werden; es zeigen:
- Fig. 1: schematisch eine erfindungsgemäße Pumpe und
- Fig. 2: schematisch den Aufbau einer Wasserspielanlage auf konventionelle Art und im Gegensatz dazu unter Verwendung der erfindungsgemäßen Pumpen.

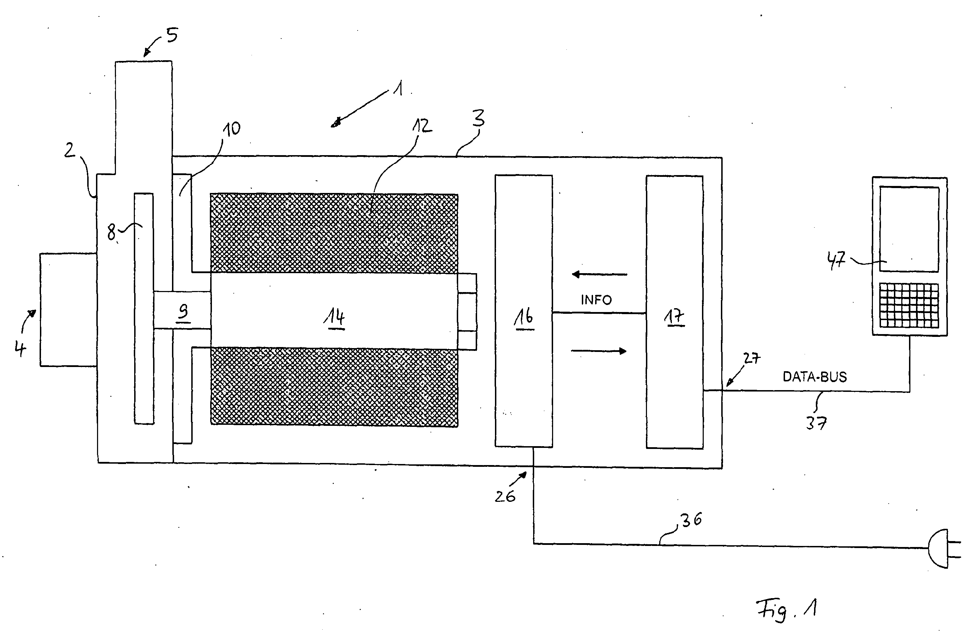

Die in Fig. 1 dargestellte Wasserpumpe besitzt ein Gehäuse 1, das sich in einen Pumpengehäuseteil 2 und einen Motorgehäuseteil 3 untergliedert. Der Pumpengehäuseteil 2 besitzt eine Ansaugöffnung 4, die den Wassereinlaß bildet, und eine Austrittsöffnung 5, die dem Wasserauslaß dient. Im Pumpengehäuseteil 2 ist ein Laufrad 8 auf einer rotierbaren Welle 9 angeordnet. Die Welle 9 erstreckt sich aus dem Pumpengehäuseteil 2 heraus in den Motorgehäuseteil 3 und in diesem in einen EC-Motor. Der EC-Motor besitzt einen mit der Welle 9 drehfest verbundenen Rotor 14 und einen diesen umgebenden Stator 12. Bevorzugt ist der Rotor 14 zweipolig und der Stator 12 sechspolig (oder zweipolig bei Schutzkleinspannung) ausgebildet. Dies unterstützt in optimalem Kosten-Nutzenverhältnis die nachfolgend noch beschriebene besondere Steuer- und Regeldynamik der Pumpe. Die Welle 9 ist in einem Lagerschild 10 gelagert, das den Motor mechanisch vom Pumpengehäuseteil 2 und dem Laufrad 8 abschirmt.

Im Gehäuse 1 befindet sich weiterhin eine Steuer- und Regelungselektronik, die bevorzugt ebenfalls im Motorgehäuse 3 und damit beabstandet von den wasserführenden Teilen angeordnet ist. Die Steuerelektronik und die Regelungselektronik kann aus Sicherheitsgründen wasserdicht vergossen sein. Dies trifft ebenfalls auf den Stator 12 des Motors zu. Sofern Stator 12 und Rotor 14 insoweit durch ein sogenanntes Spaltrohr voneinander getrennt sind, kann bevorzugt der gesamte freie Motorgehäuseteil wasserdicht vergossen sein.

Bei der Fig. 1 dargestellten Ausführungsform ist auf einer ersten motornahen Platine die gesamte Leistungselektronik 16, die ebenfalls die reine Steuerungselektronik der Pumpe beinhaltet, angeordnet. Auf einer dahintersitzenden Platine 17 befindet sich die Regelungselektronik mit Mikroprozessor und Datenspeicher sowie im Beispielsfall einem BUS-Steuerungsmodul, daß von außerhalb der Pumpe in die Pumpe gesandte Daten-BUS-Signale aufnimmt und in eine Aktivität der Pumpe umsetzt. Zwischen den beiden Platinen 16 und 17 findet innerhalb der Pumpe ein gegenseitiger Informationsaustausch statt. Die Pumpe verfügt über einen elektrischen Leistungseingang 26 und einen davon unabhängigen Steuerleitungseingang 27 durch den die Steuerinformationen eingespeist werden. Vom elektrischen Leistungseingang 26 aus verläßt ein Netzkabel 36 das Pumpengehäuse 1, während mit dem Steuerleitungseingang 27 ein Steuerdatenkabel 37 mit einem Kontrollpaneel 47 verbunden ist. Selbstverständlich können die beiden Kabel 36, 37 in einer gemeinsamen Ummantelung verlaufen, bevorzugt sind sie jedoch auch optisch erkennbar getrennt, wodurch Fehlanschlüsse vermieden werden.

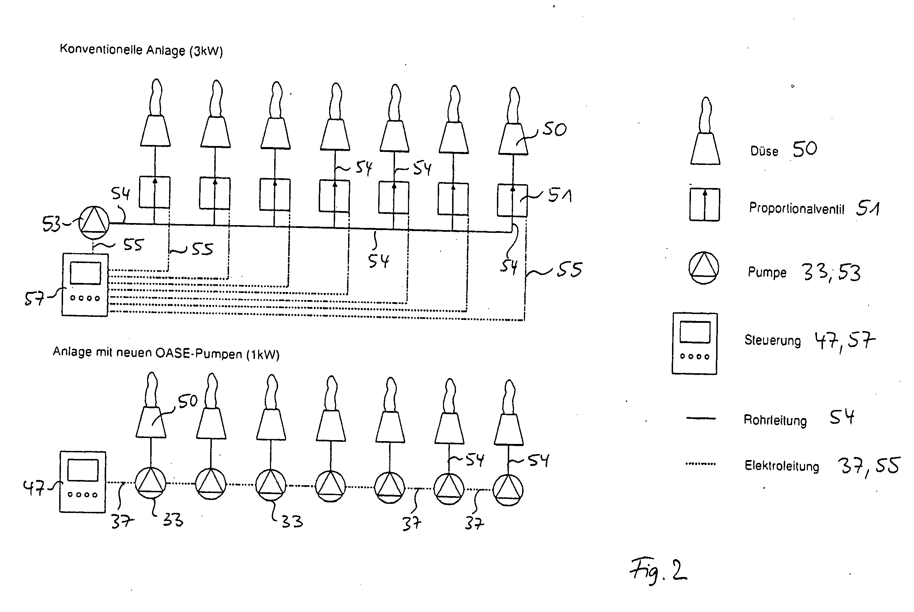

In Fig. 2 ist im oberen linken Bereich eine Wasserspiel- bzw. Springbrunnenanlage konventioneller Art dargestellt. Dabei werden mehrere Düsen 50 jeweils über ein eigenes Proportionalventil 51 und jeweils eigene Elektroleitungen 55 gesteuert. Dazu sind die Elektroleitungen 55 mit einer externen Steuerung 57 verbunden. An die externe Steuerung 57 ist auch eine zentrale Pumpe 53 angeschlossen, die über Rohrleitungen 54 stets unter Volllast laufend zu den Proportionalventilen 51 führt. Die Proportionalventile 51 geben dann von der Steuerung 57 geschaltet den Wasserfluß zu den Düsen 50 frei oder unterbrechen diesen.

Darunter ist eine neuartige Wasserspielanlage bzw. Springbrunnenanlage dargestellt, die mehrere der erfindungsgemäßen Pumpen 33 aufweist. Diese sind mit einer gemeinsamen Kontrolleinrichtung in Form des Kontrollpaneels 47 verbunden. Die Anlage weist dieselbe Anzahl von Düsen 50 wie die herkömmliche Anlage auf. Im Gegensatz zu der oberen Anlage ist jedoch bei der erfindungsgemäßen Anlage jeder Düse 50 eine eigene Pumpe 33 zugeordnet. Die Pumpen sind über Steuerkabel 37 mit dem Kontrollpaneel 47 verbunden. Auch wenn andere Steuerungssysteme möglich sind, ist hierzu insbesondere ein standardisiertes BUS-System mit digitaler Signalübermittlung bevorzugt. Die Pumpen 33 können wie dargestellt mit dem Kontrollpaneel 47 über eine elektrische bzw. elektronische Reihenschaltung verbunden werden.

Während bei dem herkömmlichen System eine komplexe Steuerung 57 von außen notwendig ist, sitzt bei dem neuen System die komplette Intelligenz in den jeweiligen Pumpen 33. Der Verdrahtungsaufwand wird auf ein Minimum reduziert, und eine aufwendige Verrohrung entfällt gänzlich. Zudem sind Pumpen mit EC-Motoren preiswert herzustellen und haben einen hohen Wirkungsgrad, der die laufenden Betriebskosten vermindert. Der Energieverbrauch bei der neuartigen Anlage verläuft etwa proportional zur abverlangten Drehzahl, entsprechend dem Wasserdurchfluß. So würde die oben dargestellte konventionelle Anlage eine bis zu dreifache Leistungsaufnahme haben als eine vergleichbare neuartige Anlage.

Die erfindungsgemäßen Pumpen 33 besitzen eine hervorragende Steuer- und Regeldynamik, die eine präzise Regelung der Pumpe 33 ermöglicht und somit ungeahnte Effekte erlaubt. Das Regelverhalten im unteren Bereich ist genauso exakt wie im oberen Bereich. Dieses Regelverhalten läßt sich mit konventioneller Technik nicht erreichen.

## Patentansprüche

1. Wasserpumpe für Springbrunnen, Gartenteiche, Wasserspiele o. dgl. Anlagen, mit einem Gehäuse (1), das einen eine Ansaugöffnung (4) und eine Austrittsöffnung (5) aufweisenden Pumpengehäuseteil (2), in dem ein Laufrad (8) mit einer Welle (9) rotierbar angeordnet ist, und einen Motorgehäuseteil (3) umfaßt, in dem ein Elektromotor aufgenommen ist, dabei der Motor ein elektronisch kommutierter Motor mit Rotor (14) und Spulen ist und im Gehäuse (1) eine Steuer- und Regelungselektronik für den Motor angeordnet ist, **dadurch gekennzeichnet, daß** die eine Drehzahlerkennung, einen Prozessor und einen Datenspeicher aufweisende Elektronik im Motorgehäuseteil (3) wasserdicht vergossen ist und mit einem integrierten BUS-Steuermodul zusammenwirkt.

2. Wasserpumpe nach Anspruch 1, **dadurch gekennzeichnet, daß** die Steuerelektronik und die Regelungselektronik räumlich getrennt, auf verschiedenen Platinen (16,17) angeordnet sind.

3. Wasserpumpe nach Anspruch 1 oder 2, **dadurch gekennzeichnet, daß** sie einen elektrischen Leistungseingang (26) und einen separaten Steuerleitungseingang (27) aufweist.

4. Wasserpumpe nach einem der Ansprüche 1 bis 3, **dadurch gekennzeichnet, daß** die Drehzahlerkennung einen Drehzahlsensor zur Erkennung der Rotorlage und der Drehfrequenz aufweist.

5. Wasserpumpe nach einem der Ansprüche 1 bis 4, **dadurch gekennzeichnet, daß** die Drehzahlerkennung sensorlos durch Messung des rückinduzierten Stromflusses an den jeweils nicht stromaufnehmenden Spulen ausgebildet ist.

6. Wasserpumpe nach einem der Ansprüche 1 bis 5, **dadurch gekennzeichnet, daß** der Datenspeicher verschiedene von außen aufrufbare Programme für unterschiedliche Arten des Pumpenbetriebs enthält.

7. Wasserspielanlage mit mehreren Wasserdüsen (50), **dadurch gekennzeichnet, daß** sie mehrere Wasserpumpen (33) nach einem der Ansprüche 1 bis 6 aufweist, die mit einer gemeinsamen Kontrolleinrichtung (47) verbunden sind.

8. Wasserspielanlage nach Anspruch 7, **dadurch gekennzeichnet, daß** die Wasserpumpen (33) mit der Kontrolleinrichtung (44) über eine Reihenschaltung verbunden sind.

9. Wasserspielanlage nach Anspruch 7 oder 8, **dadurch gekennzeichnet, daß** jede Pumpe (33) zu einem separaten Düsenelement (50) führt.

## Claims

1. A water pump for fountains, garden ponds, waterworks or similar facilities, with a housing (1) which includes a pump housing part (2), which comprises a suction opening (4) and an outlet opening (5) and in which an impeller (8) with a shaft (9) is disposed in a rotatable manner, and a motor housing part (3) in which an electric motor is accommodated, wherein the motor is an electronically commutated motor with a rotor (14) and coils and a control and regulating electronics for the motor is disposed in the housing (1), **characterised in that** the electronics, comprising a speed detection, a processor and a data memory, is cast water-tight in the motor housing part (3) and cooperates with an integrated BUS control module.

2. The water pump according to claim 1, **characterised in that** the control electronics and the regulating electronics are disposed spatially separated, on different printed circuit boards (16, 17).

3. The water pump according to claim 1 or 2, **characterised in that** it comprises an electrical power input (26) and a separate control power input (27).

4. The water pump according to any one of claims 1 to 3, **characterised in that** the speed detection comprises a speed sensor for the detection of the rotor position and the rotational frequency.

5. The water pump according to any one of claims 1 to 4, **characterised in that** the speed detection is designed sensorless by measurement of the back-induced current flow on the respective non-current-drawing coils.

6. The water pump according to any one of claims 1 to 5, **characterised in that** the data memory contains different externally addressable programs for different kinds of pump operation

7. A water fountain facility with a plurality of water jets (50), **characterised in that** it comprises a plurality of water pumps (33) according to any one of claims 1 to 6, which are connected to a common control device (47).

8. The water fountain facility according to claim 7, **characterised in that** the water pumps (33) are connected to the control device (44) via a series connection.

9. The water fountain facility according to claim 7 or 8, **characterised in that** each pump (33) leads to a separate jet element (50).

## Revendications

1. Pompe à eau pour fontaines, étangs de jardin, jeux d'eau ou installations similaires, comprenant un carter (1), lequel comporte une partie de carter de pompe (2) présentant une ouverture d'aspiration (4) et une ouverture de sortie (5), partie dans laquelle une roue mobile (8) est disposée de façon à pouvoir tourner avec un arbre (9), et une partie de carter de moteur (3), dans laquelle un moteur électrique est logé, le moteur étant ici un moteur commuté de façon électronique avec rotor (14) et bobines et une électronique de commande et de réglage pour le moteur étant disposée dans le carter (1), **caractérisée en ce que** l'électronique présentant une détection de régime, un processeur et une mémoire de données est scellée de façon étanche à l'eau dans la partie de carter de moteur (3) et coopère avec un module de commande de BUS intégré.

2. Pompe à eau selon la revendication 1, **caractérisée en ce que** l'électronique de commande et l'électronique de réglage sont disposées de façon séparée dans l'espace, sur différentes platines (16, 17).

3. Pompe à eau selon la revendication 1 ou 2, **caractérisé en ce qu'**elle présente une entrée de puissance (26) électrique et une entrée de ligne de commande (27) séparée.

4. Pompe à eau selon l'une quelconque des revendications 1 à 3, **caractérisée en ce que** la détection de régime présente un capteur de régime pour la détection de la position du rotor et de la fréquence de rotation.

5. Pompe à eau selon l'une quelconque des revendications 1 à 4, **caractérisée en ce que** la détection de régime est conçue sans capteur par mesure du flux du courant rétro-induit sur les bobines concernées qui ne consomment pas de courant.

6. Pompe à eau selon l'une quelconque des revendications 1 à 5, **caractérisée en ce que** la mémoire de données contient différents programmes pouvant être appelés de l'extérieur pour différents types de fonctionnement de pompe.

7. Installation de jeu d'eau comprenant plusieurs buses d'eau (50), **caractérisée en ce qu'**elle présente plusieurs pompes à eau (33) selon l'une quelconque des revendications 1 à 6, qui sont reliées à un dispositif de contrôle (47) commun.

8. Installation de jeu d'eau selon la revendication 7, **caractérisée en ce que** les pompes à eau (33) sont reliées au dispositif de contrôle (44) par un montage en série.

9. Installation de jeu d'eau selon la revendication 7 ou 8, **caractérisée en ce que** chaque pompe (33) aboutit à un élément de buse (50) séparé.
